# EUROPEAN PATENT SPECIFICATION

(11) **EP 4 573 347 B1**
(45) Date of publication and mention of the grant of the patent: **18.11.2026**
(21) Application number: 22956947.0
(22) Date of filing: 01.09.2022
(51) Int. Cl.: G01L 25/00, B25B 23/14

(54) **A TORQUE TESTER FOR VERIFYING MULTIPLE ELECTRONIC TORQUE WRENCHES**
DREHMOMENTTESTER ZUM VERIFIZIEREN MEHRERER ELEKTRONISCHER DREHMOMENTSCHLÜSSEL
TESTEUR DE COUPLE POUR LA VÉRIFICATION DE MULTIPLES CLÉS DYNAMOMÉTRIQUES ÉLECTRONIQUES

(43) Date of publication of application: 25.06.2025
(73) Proprietor: Apex Brands, Inc., Apex, NC 27539 (US)
(72) Inventor: SUN, Bin, Shanghai 200000 (CN); LUO, Henglian, Shanghai 200000 (CN); LI, Tong, Shanghai 200000 (CN)
(74) Representative: Meissner Bolte Nürnberg
(86) International application number: PCT/CN2022/116471
(87) International publication number: WO 2024/045121

(56) References cited:
- EP-A1- 3 995 259
- AU-A1- 2018 345 532
- CN-A- 110 501 113
- CN-A- 110 987 292
- CN-U- 206 756 372
- CN-U- 212 320 991
- FR-B3- 2 860 176
- US-A1- 2012 031 161
- US-A1- 2014 150 568
- US-A1- 2016 161 354

## Description

### TECHNOLOGICAL FIELD

The present disclosure relates generally to torque application and measurement devices and, in particular, to an apparatus for torque measurement such as an electronic torque wrench.

### BACKGROUND

Fasteners are often used to assemble performance critical components are tightened to a specified torque level to introduce a "pretension" in the fastener. As torque is applied to the head of the fastener, the fastener may begin to stretch beyond a certain level of applied torque. This stretch results in the pretension in the fastener which then holds the components together. Additionally, it is often necessary to further rotate the fastener through a specified angle after the desired torque level has been applied. A popular method of tightening these fasteners is to use a torque wrench.

Torque wrenches may be of mechanical or electronic type. Mechanical torque wrenches are generally less expensive than electronic. There are two common types of mechanical torque wrenches, beam and clicker types. In a beam type torque wrench, a beam bends relative to a non-deflecting beam in response to applied torque. The amount of deflection of the bending beam relative to the non-deflecting beam indicates the amount of torque applied to the fastener. Clicker type torque wrenches have a selectable preloaded snap mechanism with a spring to release at a specified, target torque, thereby generating a click noise to alert the operator to release force on the wrench from which the applied torque is produced.

Electronic torque wrenches tend to be more expensive than mechanical torque wrenches. Many electronic torque wrenches include a user interface with a human input device and an electronic visual display. The electronic torque wrench may receive a target torque through its user interface; and when applying torque to a fastener with an electronic torque wrench, torque readings may be indicated on the electronic visual display that relate to the pretension in the fastener due to the applied torque. The electronic torque wrench may also alert the operator to release the force on the wrench when the applied torque reaches the target torque.

A number of programs in which torque wrenches are used include use of a torque tester to periodically test the torque wrenches to verify they are within specification. A work area in which a torque wrench is being verified may include multiple torque wrenches that are waiting for verification. In some cases, the torque wrench and torque tester may be connected by wire, which enables the torque tester to recognize the torque wrench being verified; but this requires extra work to connect the torque wrench and torque tester by wire. In other cases, the torque wrench and torque tester may be connected wirelessly; but in this case, an operator typically must still identify the torque wrench to the torque tester, as the torque tester may also be wirelessly connected to or otherwise in radio range of others of the torque wrenches in the work area.

EP 3 995 259 A1 discloses an electric tool system, comprising: an electric tool including a tightening unit configured to tighten a workpiece onto an attaching target by driving force of a drive source and a sensor configured to measure a tightening torque provided by the tightening unit; an inspection device including a measuring unit configured to measure tightening force applied from the tightening unit; and an association processor configured to associate a first torque measured value with a second torque measured value, the first torque measured value corresponding to a measurement result by the sensor, the second torque measured value corresponding to a measurement result by the measuring unit.

AU 2018/345532 A1 describes an automated calibration monitoring system comprising: a plurality of storage locations configured to store inventory items including a calibrated inventory item; a database storing information on inventory items, including the calibrated inventory item, associated with the automated calibration monitoring system and configured for storage in the plurality of storage locations of the automated calibration monitoring system, wherein the database further stores a calibration parameter value for the calibrated inventory item; and a processor configured to, upon the calibrated inventory item being issued from or returned to the automated calibration monitoring system, compare a calibration measurement of the calibrated inventory item with the calibration parameter value for the calibrated inventory item.

It would therefore be desirable to have a system and method that addresses the above issue, as well as other possible issues.

### BRIEF SUMMARY

Example implementations of the present disclosure are directed to an apparatus such as a torque tester or computer for verifying multiple electronic torque wrenches or other torque measurement devices. The present disclosure includes, without limitation, the following example implementations.

Some example implementations provide a torque tester for verifying an electronic torque wrench, the torque tester comprising: a recess configured to engage a boss of an electronic torque wrench, and thereby engage the electronic torque wrench with the torque tester; and processing circuitry configured to cause the torque tester to at least: determine a reference torque value at a torque tester, from a torque applied by an electronic torque wrench to the torque tester with which the electronic torque wrench is engaged; receive multiple torque values at the torque tester contemporaneous with the reference torque value determined at the torque tester, the multiple torque values received from multiple electronic torque wrenches, including the electronic torque wrench engaged with the torque tester; identify one of the multiple torque values as a torque value from the electronic torque wrench, based on the reference torque value and the multiple torque values; perform a verification of the electronic torque wrench based on the reference torque value and the torque value as identified; and output an indication of the verification of the electronic torque wrench.

Some example implementations provide a torque tester for verifying multiple electronic torque wrenches, the torque tester comprising: a recess configured to engage a boss of an electronic torque wrench, and thereby engage the electronic torque wrench with the torque tester; and processing circuitry configured to cause the torque tester to at least: connect the torque tester to the multiple electronic torque wrenches that are in radio range of the torque tester, and thereby establish radio links between the torque tester and the multiple electronic torque wrenches; verify an electronic torque wrench of the multiple electronic torque wrenches, including the torque tester caused to: determine a reference torque value at a torque tester, from a torque applied by the electronic torque wrench to the torque tester with which the electronic torque wrench is engaged; receive multiple torque values at the torque tester contemporaneous with the reference torque value determined at the torque tester, the multiple torque values received from the multiple electronic torque wrenches, wirelessly by radio communication over the radio links; identify one of the multiple torque values as a torque value from the electronic torque wrench, based on the reference torque value and the multiple torque values; perform a verification of the electronic torque wrench based on the reference torque value and the torque value as identified; and output an indication of the verification of the electronic torque wrench; disconnect the electronic torque wrench from the torque tester after the verification of the electronic torque wrench is performed; and repeat the verifying and disconnecting for others of the multiple electronic torque wrenches that are connected to the torque tester after the electronic torque wrench is disconnected.

Some example implementations provide a method of verifying an electronic torque wrench, the method comprising: determining a reference torque value at a torque tester, from a torque applied by an electronic torque wrench to the torque tester with which the electronic torque wrench is engaged; receiving multiple torque values at the torque tester contemporaneous with the reference torque value determined at the torque tester, the multiple torque values received from multiple electronic torque wrenches, including the electronic torque wrench engaged with the torque tester; identifying one of the multiple torque values as a torque value from the electronic torque wrench, based on the reference torque value and the multiple torque values; performing a verification of the electronic torque wrench based on the reference torque value and the torque value as identified; and outputting an indication of the verification of the electronic torque wrench.

Some example implementations provide a method of verifying multiple electronic torque wrenches, the method comprising: connecting the torque tester to the multiple electronic torque wrenches that are in radio range of the torque tester, and thereby establish radio links between the torque tester and the multiple electronic torque wrenches; verifying an electronic torque wrench of the multiple electronic torque wrenches, including: determining a reference torque value at a torque tester, from a torque applied by the electronic torque wrench to the torque tester with which the electronic torque wrench is engaged; receiving multiple torque values at the torque tester contemporaneous with the reference torque value determined at the torque tester, the multiple torque values received from the multiple electronic torque wrenches, wirelessly by radio communication over the radio links; identifying one of the multiple torque values as a torque value from the electronic torque wrench, based on the reference torque value and the multiple torque values; performing a verification of the electronic torque wrench based on the reference torque value and the torque value as identified; and outputting an indication of the verification of the electronic torque wrench; disconnecting the electronic torque wrench from the torque tester after the verification of the electronic torque wrench is performed; and repeating the verifying and disconnecting for others of the multiple electronic torque wrenches that are connected to the torque tester after the electronic torque wrench is disconnected.

These and other features, aspects, and advantages of the present disclosure will be apparent from a reading of the following detailed description together with the accompanying figures, which are briefly described below. The present disclosure includes any combination of two, three, four or more features or elements set forth in this disclosure, regardless of whether such features or elements are expressly combined or otherwise recited in a specific example implementation described herein. This disclosure is intended to be read holistically such that any separable features or elements of the disclosure, in any of its aspects and example implementations, should be viewed as combinable unless the context of the disclosure clearly dictates otherwise.

It will therefore be appreciated that this Brief Summary is provided merely for purposes of summarizing some example implementations so as to provide a basic understanding of some aspects of the disclosure. Accordingly, it will be appreciated that the above described example implementations are merely examples and should not be construed to narrow the scope of the invention as defined in the appended claims.

Other example implementations, aspects and advantages will become apparent from the following detailed description taken in conjunction with the accompanying figures which illustrate, by way of example, the principles of some described example implementations.

### BRIEF DESCRIPTION OF THE FIGURE(S)

Having thus described example implementations of the disclosure in general terms, reference will now be made to the accompanying figures, which are not necessarily drawn to scale, and wherein:
FIGS. 1A and 1B illustrate an electronic torque wrench, according to some example implementations of the present disclosure;
FIG. 2 is a block diagram of an apparatus for determining an applied torque, and that may correspond to the electronic torque wrench of FIG. 1, according to some example implementations;
FIGS. 3 illustrates a system for verifying a torque measurement device such as an electronic torque wrench of multiple electronic torque wrenches, according to various example implementations;
FIGS. 4A, 4B and 4C are flowcharts illustrating various steps in a method of verifying an electronic torque wrench, according to various example implementations; and
FIG. 5 is a flowchart illustrating various steps in a method of verifying multiple electronic torque wrenches, according to various example implementations.

### DETAILED DESCRIPTION

Some implementations of the present disclosure will now be described more fully hereinafter with reference to the accompanying figures, in which some, but not all implementations of the disclosure are shown. Indeed, various implementations of the disclosure may be embodied in many different forms and should not be construed as limited to the implementations set forth herein; rather, these example implementations are provided so that this disclosure will be thorough and complete, and will fully convey the scope of the disclosure to those skilled in the art. Like reference numerals refer to like elements throughout.

Unless specified otherwise or clear from context, references to first, second or the like should not be construed to imply a particular order. A feature described as being above another feature (unless specified otherwise or clear from context) may instead be below, and vice versa; and similarly, features described as being to the left of another feature else may instead be to the right, and vice versa. Also, while reference may be made herein to quantitative measures, values, geometric relationships or the like, unless otherwise stated, any one or more if not all of these may be absolute or approximate to account for acceptable variations that may occur, such as those due to engineering tolerances or the like.

As used herein, unless specified otherwise or clear from context, the "or" of a set of operands is the "inclusive or" and thereby true if and only if one or more of the operands is true, as opposed to the "exclusive or" which is false when all of the operands are true. Thus, for example, "[A] or [B]" is true if [A] is true, or if [B] is true, or if both [A] and [B] are true. Further, the articles "a" and "an" mean "one or more," unless specified otherwise or clear from context to be directed to a singular form. Furthermore, it should be understood that unless otherwise specified, the terms "data," "content," "digital content," "information," and similar terms may be at times used interchangeably.

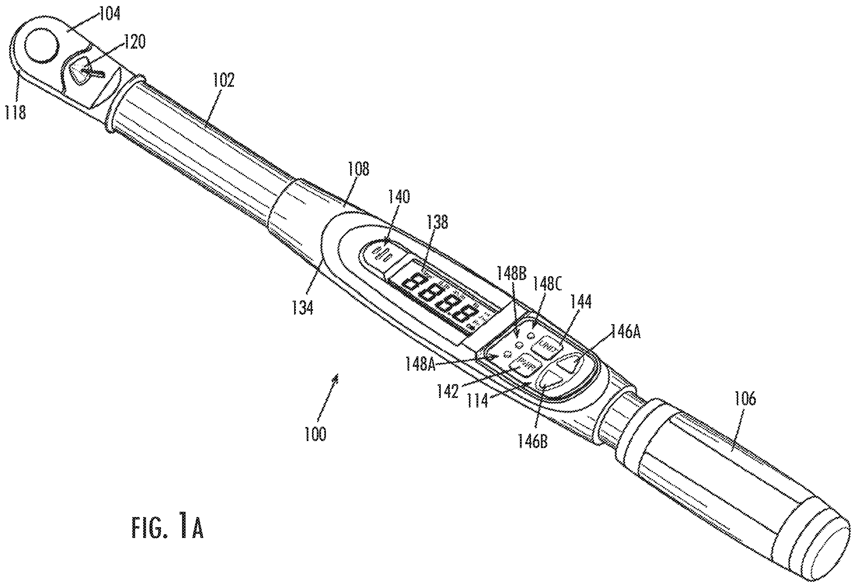

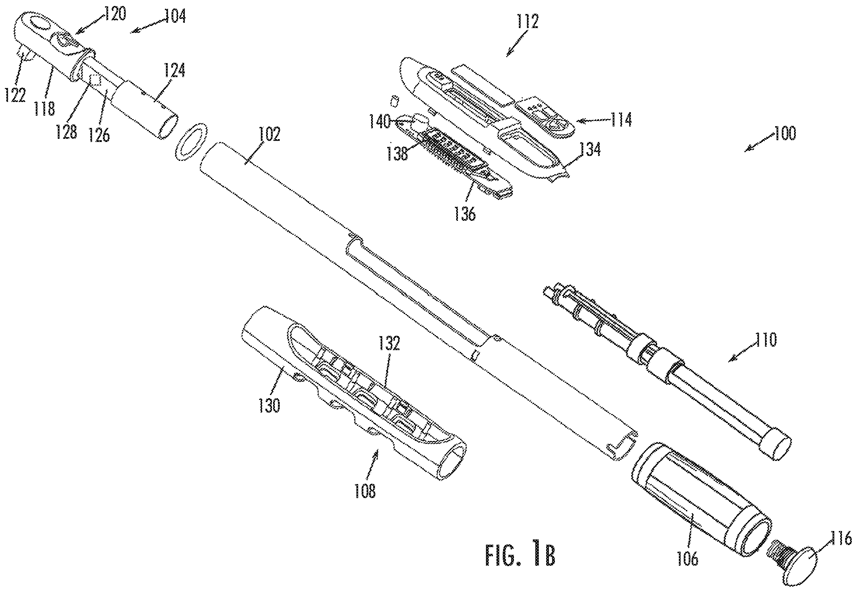

Example implementations of the present disclosure relate generally to torque application and measurement devices. Example implementations will primarily be described in the context of an electronic torque wrench. Other examples of suitable torque measurement devices include a torque tester, torque meter, torque transducer or the like. FIGS. 1A and 1B illustrate an electronic torque wrench **100** according to some example implementations of the present disclosure. As shown, the electronic torque wrench includes a wrench body **102,** a wrench head **104** (e.g., a ratcheting wrench head), a grip handle **106,** a housing **108,** a battery assembly **110,** and an electronics unit **112** with a user interface **114.** In some examples, the wrench body is of tubular construction, made of steel or other rigid material, and receives the wrench head at a first end and the battery assembly at a second end, secured therein by an end cap **116.** In some of these examples, the housing is mounted therebetween and carries the electronics unit.

As shown, a front end **118** of the wrench head **104** includes a coupler with a lever **120** that allows a user to select whether torque is applied to a fastener in either a clockwise (CW) or counter-clockwise (CCW) direction. The front end also includes a male square drive or boss **122** for receiving variously sized sockets, extensions, etc. A rear end **124** of the wrench head is slidably received in the wrench body **102** and rigidly secured therein. The wrench head includes at least one vertical flat portion **126** formed between the front end and the rear end for receiving a strain gauge assembly **128.** The flat portion of the wrench head is both transverse to the plane of rotation of torque wrench **100** and parallel to the longitudinal center axis of the wrench head. The strain gauge assembly includes one or more strain gauges. In some examples, the strain gauge assembly is a full-bridge assembly including four separate strain gauges on a single film that is secured to the flat portion of the wrench head. Together, the full-bridge strain gauge assembly mounted on the flat portion of the wrench head is referred to as a strain tensor.

As also shown, the housing **108** includes a bottom portion **130** that is slidably received about the wrench body **104** and defines an aperture **132** for receiving a top portion **134** that carries the electronics unit **112.** The electronics unit provides the user interface **114** for the operation of the electronic torque wrench **100.** The electronics unit includes a circuit board **136** including a digital display **138** and an annunciator **140** mounted thereon. The portion of the housing defines an aperture that receives the user interface, which includes a power button **142,** a unit selection button **144,** increment/decrement buttons **146A** and **146B,** and three light emitting diodes (LEDs) **148A, 148B** and **148C.** And the LEDs may illuminate green, yellow and red, respectively, when activated.

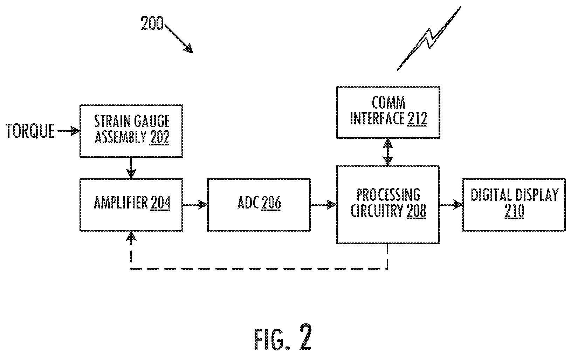

FIG. 2 illustrates a torque measurement device **200** for determining a torque value of an applied torque, according to some example implementations. The torque measurement device may be embodied in a number of different manners, and in some examples, the torque measurement device is an electronic torque wrench such as electronic torque wrench **100.** In other examples, the torque measurement device is a torque tester, torque meter, torque transducer or the like. As shown, the torque measurement device includes a strain gauge assembly **202** (e.g., strain gauge assembly **128**), an amplifier **204,** an analog-to-digital converter (ADC) **206,** and processing circuitry **208.** In some examples in which the torque measurement device **200** corresponds to electronic torque wrench **100,** the amplifier ADC and processing circuitry may be components of the electronics unit **112,** carried by the circuit board **136.**

The strain gauge assembly **202** is configured to measure an applied torque such as the torque applied to a fastener when the torque measurement device **200** is an electronic torque wrench, and produce an analog electrical signal that varies in voltage with the torque. The amplifier **204** is configured to receive the analog electrical signal, and increase an amplitude of the analog electrical signal to produce an amplified, analog electrical signal.

The ADC **206** is configured to convert the amplified, analog electrical signal to an equivalent digital electrical signal. The processing circuitry **208,** then, is configured to determine the torque value of the torque applied to the fastener from the equivalent digital electrical signal, and output an indication of the torque value. In some examples, the equivalent digital electrical signal includes digital data points; and in some of these examples, the processing circuitry is configured to determine a subset of the digital data points in a moving sample window, and calculate the torque value from a rolling average of the subset of the digital data points in the moving sample window.

The processing circuitry **208** may output the indication of the torque value in a number of different manners. In some examples, the torque measurement device **200** further includes a digital display **210** (e.g., digital display **138**), and the processing circuitry is configured to output the indication of the torque value to the digital display that is configured to display the torque value.

As also shown, the torque measurement device **200** may include a communication interface **212** is configured to enable the torque measurement device to telecommunicate with another apparatus by wire, or wirelessly by radio or optical communication. As described herein, the communication interface is an electronic circuit; and in various examples, the communication interface includes a cable connector, an antenna or optoelectronics for the electronic transmission of information over a data link between the apparatus and computer / computer hardware. Examples of suitable communication interfaces include a network interface controller (NIC), wireless NIC (WNIC) or the like.

To further illustrate calculation of the torque value according to various example implementations, consider an example in which the processing circuitry **208** samples one thousand digital data points per second and uses a moving sample window of ten milliseconds. As torque is applied, the processing circuitry may average the first ten digital data points, one taken each millisecond, thereby producing a first equivalent digital value at time t = 0.01 seconds, wherein *t =* 0.0 seconds marks initiation of the torquing operation. At time *t =* 0.011 seconds, the processing circuitry may average the digital data points taken between times *t =* 0.002 and *t =* 0.011 seconds, thereby producing a second equivalent digital value. At time *t =* 0.012 seconds, the processing circuitry may average the digital data points taken between times t = 0.003 seconds and *t* = 0.012 seconds, thereby producing a third equivalent digital value. And this may continue such that an equivalent digital value may be provided every millisecond until the torque is no longer applied. In short, the processing circuitry may utilize a digital filtering algorithm to provide a rolling average in which the oldest digital data point is dropped each time a new digital data point is received within the moving sample window.

As explained in the background section, a number of programs in which torque wrenches are used include use of a torque tester to periodically test the torque wrenches to verify they are within specification. A work area in which a torque wrench is being verified may include multiple torque wrenches that are waiting for verification, and a torque tester may be wirelessly connected to or otherwise in radio range of the multiple torque wrenches including a torque wrench being verified. Example implementations of the present disclosure provide a torque tester configured to identify one of multiple electronic torque wrenches that is being verified, without a wired connection or an operator identifying the electronic torque wrench to the torque tester.

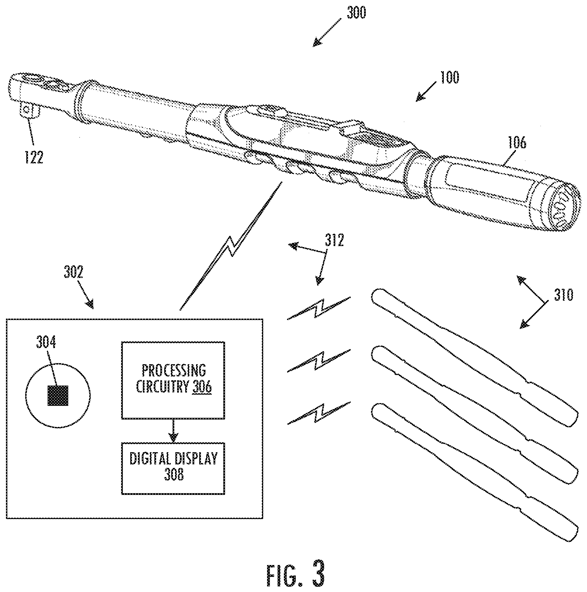

FIG. 3 illustrates a system **300** for verifying a torque measurement device **200** such as an electronic torque wrench **100** of multiple electronic torque wrenches, according to various example implementations. According to various example implementations, the system includes the the torque mesaurement device and an apparatus for calibrating the torque measurement device. The apparatus may be embodied in a number of different manners. In the example shown in FIG. 3 in which the torque measurement device is an electronic torque wrench, the apparatus is embodied as a torque tester **302** that the electronic torque wrench is configured to engage. In this regard, the torque tester may include a female square drive or recess **304** configured to receive the boss **122** of the electronic torque wrench. The torque tester may include circuitry that is the same as or similar to the torque measurement device **200,** including processing circuitry **306** and a digital display **308.**

During verification of an electronic torque wrench **100,** the electronic torque wrench is engaged with the torque tester **302** and a rotational force is applied at the grip handle **106,** which produces a torque at the torque tester. The processing circuitry **306** of the torque tester is configured to determine a reference torque value at the torque tester, from the torque applied by the electronic torque wrench. In this regard, the torque tester may be configured to determine the reference torque value in a manner the same as or similar to the processing circuitry **208** of the torque measurement device **200** is configured to determine a torque value.

In some examples, the torque tester **302** and thereby the processing circuitry **306** is configured to receive multiple torque values contemporaneous with the reference torque value determined at the torque tester. The multiple torque values may be received from multiple electronic torque wrenches **310,** including the electronic torque wrench engaged with the torque tester. The processing circuitry is configured to identify one of the multiple torque values as a torque value (for verification) from the electronic torque wrench, based on the reference torque value and the multiple torque values.

The one of the multiple torque values may be identified in a number of different manners. In some examples, the one of the multiple torque values is identified as the one within a threshold value of the reference torque value, or the one closest to the reference torque value. In other examples, the one of the multiple torque values is identified as the one for which a rate of change is within a threshold rate of the rate of change of the reference torque value, or the one for which a rate of change is closest to the rate of change of the reference torque value. The one of the multiple torque values may be identified as the one within a threshold value of the reference torque value, and for which a rate of change is within a threshold rate of the rate of change of the reference torque value. Or the one of the multiple torque values may be identified as the one closest to the reference torque value, and for which a rate of change is closest to the rate of change of the reference torque value.

Regardless of the exact manner by which the one of the multiple torque values is identified as the torque value, the processing circuitry **306** is configured to perform a verification of the electronic torque wrench **100** based on the reference torque value and the torque value as identified. And the processing circuitry is configured to output an indication of the verification of the electronic torque wrench. The indication of the verification may be output in a number of different manners, such as to the digital display **308** that is configured to display the indication.

In some examples, the processing circuitry **306** is further configured to connect the torque tester **302** to the multiple electronic torque wrenches **310** that are in radio range of the torque tester, and thereby establish radio links **312** over which the multiple torque values are received wirelessly by radio communication. Examples of suitable radio links include one or more of Wi-Fi, Bluetooth, Bluetooth Low Energy, Zigbee or frequency-shift keying (FSK) links. The processing circuitry may be configured to disconnect the electronic torque wrench 100 from the torque tester after the verification of the electronic torque wrench is performed. This may enable the torque tester to repeat the process to verify others of the multiple electronic torque wrenches. That is, the processing circuitry may be further configured to cause the torque tester **302** to repeat the verifying and disconnecting for others of the multiple electronic torque wrenches that are connected to the torque tester after the electronic torque wrench is disconnected.

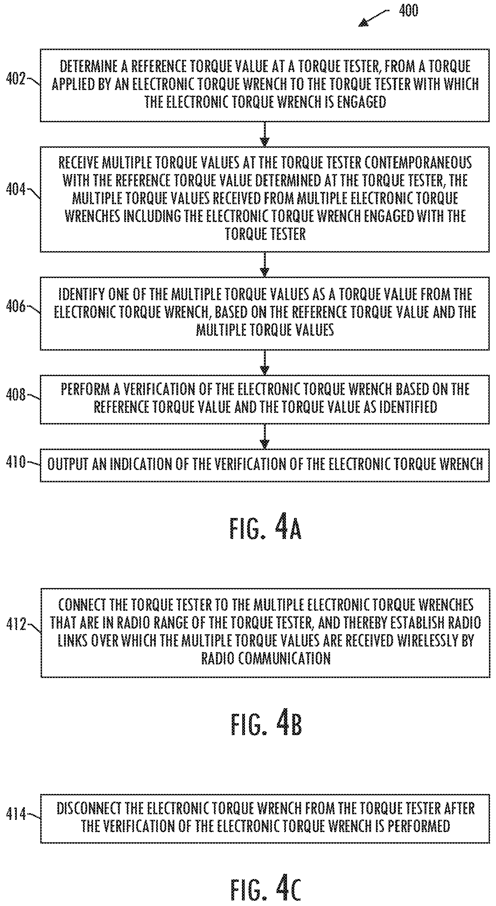

FIGS. 4A - 4C are flowcharts illustrating various steps in a method **400** of verifying an electronic torque wrench, according to various example implementations. The method includes determining a reference torque value at a torque tester, from a torque applied by an electronic torque wrench to the torque tester with which the electronic torque wrench is engaged, as shown at block **402** of FIG. 4A. The method includes receiving multiple torque values at the torque tester contemporaneous with the reference torque value determined at the torque tester, the multiple torque values received from multiple electronic torque wrenches, including the electronic torque wrench engaged with the torque tester, as shown at block **404.**

The method **400** includes identifying one of the multiple torque values as a torque value from the electronic torque wrench, based on the reference torque value and the multiple torque values, as shown at block **406.** The method includes performing a verification of the electronic torque wrench based on the reference torque value and the torque value as identified, as shown at block **408.** And the method includes outputting an indication of the verification of the electronic torque wrench, as shown at block **410.**

In some examples, the one of the multiple torque values is identified at block **406** as the one within a threshold value of the reference torque value.

In some examples, the one of the multiple torque values is identified at block **406** as the one for which a rate of change is within a threshold rate of the rate of change of the reference torque value.

In some examples, the one of the multiple torque values is identified at block **406** as the one within a threshold value of the reference torque value, and for which a rate of change is within a threshold rate of the rate of change of the reference torque value.

In some examples, the one of the multiple torque values is identified at block **406** as the one closest to the reference torque value.

In some examples, the one of the multiple torque values is identified at block **406** as the one for which a rate of change is closest to the rate of change of the reference torque value.

In some examples, the one of the multiple torque values is identified at block **406** as the one closest to the reference torque value, and for which a rate of change is closest to the rate of change of the reference torque value.

In some examples, the method **400** further includes connecting the torque tester to the multiple electronic torque wrenches that are in radio range of the torque tester, and thereby establish radio links over which the multiple torque values are received wirelessly by radio communication, as shown at block **412** of FIG. 4B.

In some examples, the radio links include one or more of Wi-Fi, Bluetooth, Bluetooth Low Energy, Zigbee or frequency-shift keying (FSK) links.

In some examples, the method **400** further includes disconnecting the electronic torque wrench from the torque tester after the verification of the electronic torque wrench is performed, as shown at block **414** of FIG. 4C.

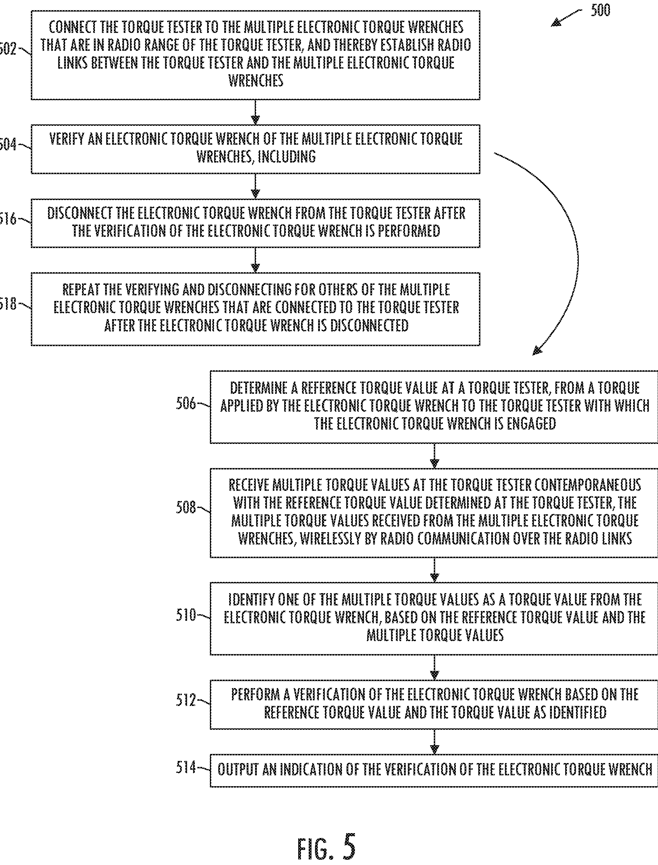

FIG. 5 is a flowchart illustrating various steps in a method **500** of verifying multiple electronic torque wrenches, according to various example implementations. The method includes connecting the torque tester to the multiple electronic torque wrenches that are in radio range of the torque tester, and thereby establish radio links between the torque tester and the multiple electronic torque wrenches, as shown at block **502.** The method includes verifying an electronic torque wrench of the multiple electronic torque wrenches, as shown at block **504.**

Verifing the electronic torque wrench at block **504** includes determining at block **506** a reference torque value at a torque tester, from a torque applied by the electronic torque wrench to the torque tester with which the electronic torque wrench is engaged. Multiple torque values are received at the torque tester contemporaneous with the reference torque value determined at the torque tester, the multiple torque values received from the multiple electronic torque wrenches, wirelessly by radio communication over the radio links, as shown at block **508.** One of the multiple torque values is identified as a torque value from the electronic torque wrench, based on the reference torque value and the multiple torque values, as shown at block **510.** A verification of the electronic torque wrench is performed based on the reference torque value and the torque value as identified, as shown at block **512.** And an indication of the verification of the electronic torque wrench is output, as shown at block **514.**

As also shown, the method **500** includes disconnecting the electronic torque wrench from the torque tester after the verification of the electronic torque wrench is performed, as shown at block **516.** And the method includes repeating the verifying and disconnecting for others of the multiple electronic torque wrenches that are connected to the torque tester after the electronic torque wrench is disconnected, as shown at block **518.**

In some examples, the radio links include one or more of Wi-Fi, Bluetooth, Bluetooth Low Energy, Zigbee or frequency-shift keying (FSK) links.

In some examples, the one of the multiple torque values is identified at block **510** as the one within a threshold value of the reference torque value.

In some examples, the one of the multiple torque values is identified at block **510** as the one for which a rate of change is within a threshold rate of the rate of change of the reference torque value.

In some examples, the one of the multiple torque values is identified at block **510** as the one within a threshold value of the reference torque value, and for which a rate of change is within a threshold rate of the rate of change of the reference torque value.

In some examples, the one of the multiple torque values is identified at block **510** as the one closest to the reference torque value.

In some examples, the one of the multiple torque values is identified at block **510** as the one for which a rate of change is closest to the rate of change of the reference torque value.

In some examples, the one of the multiple torque values is identified at block **510** as the one closest to the reference torque value, and for which a rate of change is closest to the rate of change of the reference torque value.

Many modifications and other implementations of the disclosure set forth herein will come to mind to one skilled in the art to which the disclosure pertains having the benefit of the teachings presented in the foregoing description and the associated figures. Therefore, it is to be understood that the disclosure is not to be limited to the specific implementations disclosed and that modifications and other implementations are intended to be included within the scope of the appended claims. Moreover, although the foregoing description and the associated figures describe example implementations in the context of certain example combinations of elements and/or functions, it should be appreciated that different combinations of elements and/or functions may be provided by alternative implementations without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A torque tester (302) for verifying an electronic torque wrench (100), the torque tester (302) comprising:
a recess (304) configured to engage a boss (122) of an electronic torque wrench (100),
and thereby engage the electronic torque wrench (100) with the torque tester (302); and
processing circuitry (208) configured to cause the torque tester (302) to at least:
determine a reference torque value at a torque tester, from a torque applied by an electronic torque wrench (100) to the torque tester (302) with which the electronic torque wrench (100) is engaged (402);
receive multiple torque values at the torque tester (302) contemporaneous with the reference torque value determined at the torque tester, the multiple torque values received from multiple electronic torque wrenches, including the electronic torque wrench (100) engaged with the torque tester (302) (404);
identify one of the multiple torque values as a torque value from the electronic torque wrench (100), based on the reference torque value and the multiple torque values (406);
perform a verification of the electronic torque wrench (100) based on the reference torque value and the torque value as identified (408); and
output an indication of the verification of the electronic torque wrench (100) (410).

2. The torque tester (302) of claim 1, wherein the one of the multiple torque values is identified as the one within a threshold value of the reference torque value, or the one closest to the reference torque value.

3. The torque tester (302) of claim 1 or 2, wherein the one of the multiple torque values is identified as the one for which a rate of change is within a threshold rate of the rate of change of the reference torque value, or the one for which the rate of change is closest to the rate of change of the reference torque value.

4. The torque tester (302) of any of claims 1 to 3, wherein the one of the multiple torque values is identified as the one within a threshold value of the reference torque value, and for which a rate of change is within a threshold rate of the rate of change of the reference torque value; and/or
wherein the one of the multiple torque values is identified as the one closest to the reference torque value, and for which a rate of change is closest to the rate of change of the reference torque value.

5. The torque tester (302) of any of claims 1 to 4, wherein the processing circuitry (208) is configured to cause the torque tester (302) to further connect the torque tester (302) to the multiple electronic torque wrenches that are in radio range of the torque tester, and thereby establish radio links over which the multiple torque values are received wirelessly by radio communication;
optionally, wherein the radio links include one or more of Wi-Fi, Bluetooth, Bluetooth Low Energy, Zigbee or frequency-shift keying (FSK) links; and/or
optionally, wherein the processing circuitry (208) is configured to cause the torque tester (302) to further disconnect the electronic torque wrench (100) from the torque tester (302) after the verification of the electronic torque wrench (100) is performed.

6. The torque tester (302) of claim 1, wherein the torque tester (302) is configured for verifying multiple electronic torque wrenches (500), and wherein the processing circuitry (208) of the torque tester (302) is configured to cause the torque tester (302) to at least:
connect the torque tester (302) to the multiple electronic torque wrenches that are in radio range of the torque tester, and thereby establish radio links between the torque tester (302) and the multiple electronic torque wrenches (502);
verify an electronic torque wrench (100) of the multiple electronic torque wrenches, including the torque tester (302) (504) caused to:
determine the reference torque value at the torque tester, from the torque applied by the electronic torque wrench (100) to the torque tester (302) with which the electronic torque wrench (100) is engaged (506);
receive the multiple torque values at the torque tester (302) contemporaneous with the reference torque value determined at the torque tester, the multiple torque values received from the multiple electronic torque wrenches, wirelessly by radio communication over the radio links (508);
identify the one of the multiple torque values as the torque value from the electronic torque wrench (100), based on the reference torque value and the multiple torque values (510);
perform the verification of the electronic torque wrench (100) based on the reference torque value and the torque value as identified (512); and
output the indication of the verification of the electronic torque wrench (100) (514);
disconnect the electronic torque wrench (100) from the torque tester (302) after the verification of the electronic torque wrench (100) is performed (516); and
repeat the verifying and disconnecting for others of the multiple electronic torque wrenches that are connected to the torque tester (302) after the electronic torque wrench (100) is disconnected (516).

7. The torque tester (302) of claim 6, wherein the radio links include one or more of Wi-Fi, Bluetooth, Bluetooth Low Energy, Zigbee or frequency-shift keying (FSK) links.

8. The torque tester (302) of claim 6 or 7, wherein the one of the multiple torque values is identified as the one within a threshold value of the reference torque value, or the one closest to the reference torque value.

9. The torque tester (302) of any of claims 6 to 8, wherein the one of the multiple torque values is identified as the one for which a rate of change is within a threshold rate of the rate of change of the reference torque value, or the one for which the rate of change is closest to the rate of change of the reference torque value.

10. The torque tester (302) of any of claims 6 to 9, wherein the one of the multiple torque values is identified as the one within a threshold value of the reference torque value, and for which a rate of change is within a threshold rate of the rate of change of the reference torque value; and/or
wherein the one of the multiple torque values is identified as the one closest to the reference torque value, and for which a rate of change is closest to the rate of change of the reference torque value.

11. A method of verifying an electronic torque wrench (100), the method comprising:
determining a reference torque value at a torque tester (302), from a torque applied by an electronic torque wrench (100) to the torque tester (302) with which the electronic torque wrench (100) is engaged (402);
receiving multiple torque values at the torque tester (302) contemporaneous with the reference torque value determined at the torque tester, the multiple torque values received from multiple electronic torque wrenches, including the electronic torque wrench (100) engaged with the torque tester (302) (404);
identifying one of the multiple torque values as a torque value from the electronic torque wrench (100), based on the reference torque value and the multiple torque values (406);
performing a verification of the electronic torque wrench (100) based on the reference torque value and the torque value as identified (408); and
outputting an indication of the verification of the electronic torque wrench (100) (410).

12. The method of claim 11, wherein the one of the multiple torque values is identified as the one within a threshold value of the reference torque value, or the one closest to the reference torque value.

13. The method of claim 11 or 12, wherein the one of the multiple torque values is identified as the one for which a rate of change is within a threshold rate of the rate of change of the reference torque value, or the one for which the rate of change is closest to the rate of change of the reference torque value.

14. The method of any of claims 11 to 13, wherein the one of the multiple torque values is identified as the one within a threshold value of the reference torque value, and for which a rate of change is within a threshold rate of the rate of change of the reference torque value; and/or
wherein the one of the multiple torque values is identified as the one closest to the reference torque value, and for which a rate of change is closest to the rate of change of the reference torque value.

15. The method of any of claims 11 to 14, wherein the method further comprises connecting the torque tester (302) to the multiple electronic torque wrenches that are in radio range of the torque tester, and thereby establish radio links over which the multiple torque values are received wirelessly by radio communication;
optionally, wherein the method further comprises disconnecting the electronic torque wrench (100) from the torque tester (302) after the verification of the electronic torque wrench (100) is performed.

## Patentansprüche

1. Drehmomentprüfer (302) zum Überprüfen eines elektronischen Drehmomentschlüssels (100), wobei der Drehmomentprüfer (302) umfasst:
eine Aussparung (304), die so ausgebildet oder konfiguriert ist, dass sie in einen Vorsprung (122) eines elektronischen Drehmomentschlüssels (100) eingreift und dadurch den elektronischen Drehmomentschlüssel (100) mit dem Drehmomentprüfer (302) in Eingriff bringt; und
eine Verarbeitungsschaltung (208), die ausgebildet oder konfiguriert ist, dass sie den Drehmomentprüfer (302) dazu veranlasst, zumindest:
einen Referenzdrehmomentwert am Drehmomentprüfer aus einem Drehmoment zu ermitteln (402), das von einem elektronischen Drehmomentschlüssel (100) auf den Drehmomentprüfer (302) ausgeübt wird, mit dem der elektronische Drehmomentschlüssel (100) in Eingriff steht;
mehrere Drehmomentwerte am Drehmomentprüfer (302) zeitgleich mit dem am Drehmomentprüfer ermittelten Referenzdrehmomentwert zu empfangen (404), wobei die mehreren Drehmomentwerte von mehreren elektronischen Drehmomentschlüsseln empfangen werden, einschließlich des mit dem Drehmomentprüfer (302) in Eingriff stehenden elektronischen Drehmomentschlüssels (100);
einen der mehreren Drehmomentwerte als Drehmomentwert des elektronischen Drehmomentschlüssels (100) auf der Grundlage des Referenzdrehmomentwerts und der mehreren Drehmomentwerte zu identifizieren (406);
eine Überprüfung des elektronischen Drehmomentschlüssels (100) auf der Grundlage des Referenzdrehmomentwerts und des identifizierten Drehmomentwerts durchzuführen (408); und
eine Anzeige der Überprüfung des elektronischen Drehmomentschlüssels (100) auszugeben (410).

2. Drehmomentprüfer (302) nach Anspruch1, wobei der eine der mehreren Drehmomentwerte als derjenige identifiziert wird, der innerhalb eines Schwellenwerts des Referenzdrehmomentwerts liegt, oder als derjenige, der dem Referenzdrehmomentwert am nächsten liegt.

3. Drehmomentprüfer (302) nach Anspruch1oder 2, wobei der eine der mehreren Drehmomentwerte als derjenige identifiziert wird, dessen Änderungsrate innerhalb einer Schwellenrate der Änderungsrate des Referenzdrehmomentwerts liegt, oder als derjenige, dessen Änderungsrate der Änderungsrate des Referenzdrehmomentwerts am nächsten kommt.

4. Drehmomentprüfer (302) nach einem der Ansprüche1bis 3, wobei der eine der mehreren Drehmomentwerte als derjenige identifiziert wird, der innerhalb eines Schwellenwerts des Referenzdrehmomentwerts liegt und für den eine Änderungsrate innerhalb einer Schwellenrate der Änderungsrate des Referenzdrehmomentwerts liegt; und/oder
wobei der eine der mehreren Drehmomentwerte als derjenige identifiziert wird, der dem Referenzdrehmomentwert am nächsten liegt und dessen Änderungsrate der Änderungsrate des Referenzdrehmomentwerts am nächsten kommt.

5. Drehmomentprüfer (302) nach einem der Ansprüche1bis 4, wobei die Verarbeitungsschaltung (208) so ausgebildet oder konfiguriert ist, dass sie den Drehmomentprüfer (302) veranlasst, den Drehmomentprüfer (302) ferner mit den mehreren elektronischen Drehmomentschlüsseln zu verbinden, die sich in Funkreichweite des Drehmomentprüfers befinden, und dadurch Funkverbindungen herzustellen, über die die mehreren Drehmomentwerte drahtlos per Funkkommunikation empfangen werden;
optional, wobei die Funkverbindungen eine oder mehrere der folgenden Verbindungen umfassen: Wi-Fi, Bluetooth, Bluetooth Low Energy, Zigbee oder Frequenzumtastung (FSK); und/oder
optional, wobei die Verarbeitungsschaltung (208) so ausgebildet oder konfiguriert ist, dass sie den Drehmomentprüfer (302) veranlasst, ferner den elektronischen Drehmomentschlüssel (100) vom Drehmomentprüfer (302) zu trennen, nachdem die Überprüfung des elektronischen Drehmomentschlüssels (100) durchgeführt wurde.

6. Drehmomentprüfer (302) nach Anspruch 1, wobei der Drehmomentprüfer (302) zum Überprüfen mehrerer elektronischer Drehmomentschlüssel (500) ausgebildet ist und wobei die Verarbeitungsschaltung (208) des Drehmomentprüfers (302) so ausgebildet ist, dass sie den Drehmomentprüfer (302) veranlasst, zumindest:
den Drehmomentprüfer (302) mit den mehreren elektronischen Drehmomentschlüsseln zu verbinden, die sich in Funkreichweite des Drehmomentprüfers befinden, und dadurch Funkverbindungen zwischen dem Drehmomentprüfer (302) und den mehreren elektronischen Drehmomentschlüsseln herzustellen (502);
einen elektronischen Drehmomentschlüssel (100) der mehreren elektronischen Drehmomentschlüssel zu überprüfen (504), einschließlich, dass der Drehmomentprüfer (302) veranlasst wird:
den Referenzdrehmomentwert am Drehmomentprüfer aus dem Drehmoment zu ermitteln (506), das der elektronische Drehmomentschlüssel (100) auf den Drehmomentprüfer (302) ausübt, mit dem der elektronische Drehmomentschlüssel (100) in Eingriff steht;
die mehreren Drehmomentwerte am Drehmomentprüfer (302) zeitgleich mit dem am Drehmomentprüfer ermittelten Referenzdrehmomentwert zu empfangen (508), wobei die mehreren Drehmomentwerte von den mehreren elektronischen Drehmomentschlüsseln drahtlos per Funkkommunikation über die Funkverbindungen empfangen werden;
den einen der mehreren Drehmomentwerte als den Drehmomentwert des elektronischen Drehmomentschlüssels (100) auf der Grundlage des Referenzdrehmomentwerts und der mehreren Drehmomentwerte zu identifizieren (510);
die Überprüfung des elektronischen Drehmomentschlüssels (100) auf der Grundlage des Referenzdrehmomentwerts und des identifizierten Drehmomentwerts durchzuführen (512); und
die Anzeige der Überprüfung des elektronischen Drehmomentschlüssels (100) auszugeben (514);
den elektronischen Drehmomentschlüssel (100) vom Drehmomentprüfer (302) zu trennen (516), nachdem die Überprüfung des elektronischen Drehmomentschlüssels (100) durchgeführt wurde; und
das Überprüfen und Trennen für weitere der mehreren elektronischen Drehmomentschlüssel, die mit dem Drehmomentprüfer (302) verbunden sind, zu wiederholen (516), nachdem der elektronische Drehmomentschlüssel (100) getrennt wurde.

7. Drehmomentprüfer (302) nach Anspruch 6, wobei die Funkverbindungen eine oder mehrere der folgenden Verbindungen umfassen: Wi-Fi, Bluetooth, Bluetooth Low Energy, Zigbee oder Frequenzumtastung (FSK).

8. Drehmomentprüfer (302) nach Anspruch 6 oder 7, wobei der eine der mehreren Drehmomentwerte als derjenige identifiziert wird, der innerhalb eines Schwellenwerts des Referenzdrehmomentwerts liegt, oder als derjenige, der dem Referenzdrehmomentwert am nächsten liegt.

9. Drehmomentprüfer (302) nach einem der Ansprüche 6 bis 8, wobei der eine der mehreren Drehmomentwerte als derjenige identifiziert wird, dessen Änderungsrate innerhalb einer Schwellenrate der Änderungsrate des Referenzdrehmomentwerts liegt, oder als derjenige, dessen Änderungsrate der Änderungsrate des Referenzdrehmomentwerts am nächsten kommt.

10. Drehmomentprüfer (302) nach einem der Ansprüche 6 bis 9, wobei der eine der mehreren Drehmomentwerte als derjenige identifiziert wird, der innerhalb eines Schwellenwerts des Referenzdrehmomentwerts liegt und für den eine Änderungsrate innerhalb einer Schwellenrate der Änderungsrate des Referenzdrehmomentwerts liegt; und/oder
wobei der eine der mehreren Drehmomentwerte als derjenige identifiziert wird, der dem Referenzdrehmomentwert am nächsten liegt und dessen Änderungsrate der Änderungsrate des Referenzdrehmomentwerts am nächsten kommt.

11. Verfahren zum Überprüfen eines elektronischen Drehmomentschlüssels (100), wobei das Verfahren umfasst:
Ermitteln (402) eines Referenzdrehmomentwerts an einem Drehmomentprüfer (302) anhand eines Drehmoments, das von einem elektronischen Drehmomentschlüssel (100) auf den Drehmomentprüfer (302) ausgeübt wird, mit dem der elektronische Drehmomentschlüssel (100) in Eingriff steht;
Empfangen (404) mehrerer Drehmomentwerte am Drehmomentprüfer (302) zeitgleich mit dem am Drehmomentprüfer ermittelten Referenzdrehmomentwert, wobei die mehreren Drehmomentwerte von mehreren elektronischen Drehmomentschlüsseln empfangen werden, einschließlich des mit dem Drehmomentprüfer (302) in Eingriff stehenden elektronischen Drehmomentschlüssels (100);
Identifizieren (406) eines der mehreren Drehmomentwerte als Drehmomentwert des elektronischen Drehmomentschlüssels (100) auf der Grundlage des Referenzdrehmomentwerts und der mehreren Drehmomentwerte;
Durchführen (408) einer Überprüfung des elektronischen Drehmomentschlüssels (100) auf der Grundlage des Referenzdrehmomentwerts und des identifizierten Drehmomentwerts; und
Ausgeben (410) einer Anzeige der Überprüfung des elektronischen Drehmomentschlüssels (100).

12. Verfahren nach Anspruch 11, wobei der eine der mehreren Drehmomentwerte als derjenige identifiziert wird, der innerhalb eines Schwellenwerts des Referenzdrehmomentwerts liegt, oder als derjenige, der dem Referenzdrehmomentwert am nächsten liegt.

13. Verfahren nach Anspruch 11 oder 12, wobei der eine der mehreren Drehmomentwerte als derjenige identifiziert wird, dessen Änderungsrate innerhalb einer Schwellenrate der Änderungsrate des Referenzdrehmomentwerts liegt, oder als derjenige, dessen Änderungsrate der Änderungsrate des Referenzdrehmomentwerts am nächsten liegt.

14. Verfahren nach einem der Ansprüche 11 bis 13, wobei der eine der mehreren Drehmomentwerte als derjenige identifiziert wird, der innerhalb eines Schwellenwerts des Referenzdrehmomentwerts liegt und für den eine Änderungsrate innerhalb einer Schwellenrate der Änderungsrate des Referenzdrehmomentwerts liegt; und/oder
wobei der eine der mehreren Drehmomentwerte als derjenige identifiziert wird, der dem Referenzdrehmomentwert am nächsten liegt und dessen Änderungsrate der Änderungsrate des Referenzdrehmomentwerts am nächsten kommt.

15. Verfahren nach einem der Ansprüche 11 bis 14, wobei das Verfahren ferner umfasst, den Drehmomentprüfer (302) mit den mehreren elektronischen Drehmomentschlüsseln zu verbinden, die sich in Funkreichweite des Drehmomentprüfers befinden, und dadurch Funkverbindungen herzustellen, über die die mehreren Drehmomentwerte drahtlos per Funkkommunikation empfangen werden;
optional, wobei das Verfahren ferner das Trennen des elektronischen Drehmomentschlüssels (100) vom Drehmomentprüfer (302) umfasst, nachdem die Überprüfung des elektronischen Drehmomentschlüssels (100) durchgeführt wurde.

## Revendications

1. Testeur de couple (302) destiné à vérifier une clé dynamométrique électronique (100), le testeur de couple (302) comprenant :
un évidement (304) configuré pour venir en prise avec un bossage (122) d'une clé dynamométrique électronique (100), et ainsi mettre en prise la clé dynamométrique électronique (100) avec le testeur de couple (302) ; et
un circuit de traitement (208) configuré pour amener le testeur de couple (302) à au moins :
déterminer une valeur de couple de référence au niveau du testeur de couple, à partir d'un couple appliqué par une clé dynamométrique électronique (100) au testeur de couple (302) avec lequel la clé dynamométrique électronique (100) est engagée (402) ;
recevoir, au niveau du testeur de couple (302), plusieurs valeurs de couple simultanément à la valeur de couple de référence déterminée au niveau du testeur de couple, lesdites plusieurs valeurs de couple étant reçues de plusieurs clés dynamométriques électroniques, y compris la clé dynamométrique électronique (100) engagée avec le testeur de couple (302) (404) ;
identifier l'une des multiples valeurs de couple comme étant une valeur de couple provenant de la clé dynamométrique électronique (100), sur la base de la valeur de couple de référence et des multiples valeurs de couple (406) ;
effectuer une vérification de la clé dynamométrique électronique (100) sur la base de la valeur de couple de référence et de la valeur de couple ainsi identifiée (408) ; et
fournir une indication relative à la vérification de la clé dynamométrique électronique (100) (410).

2. Le testeur de couple (302) selon la revendication1, dans lequel ladite valeur de couple parmi les multiples valeurs de couple est identifiée comme étant celle qui se situe dans une plage de valeur seuil par rapport à la valeur de couple de référence, ou celle qui est la plus proche de la valeur de couple de référence.

3. Le testeur de couple (302) selon la revendication1ou 2, dans lequel l'une des multiples valeurs de couple est identifiée comme étant celle pour laquelle un taux de variation se situe dans une plage de seuil par rapport au taux de variation de la valeur de couple de référence, ou celle pour laquelle le taux de variation est le plus proche du taux de variation de la valeur de couple de référence.

4. Le testeur de couple (302) selon l'une quelconque des revendications1à 3, dans lequel l'une des multiples valeurs de couple est identifiée comme étant celle qui se situe à l'intérieur d'une valeur seuil par rapport à la valeur de couple de référence, et pour laquelle un taux de variation se situe à l'intérieur d'un taux seuil par rapport au taux de variation de la valeur de couple de référence ; et/ou
dans lequel l'une des multiples valeurs de couple est identifiée comme étant celle la plus proche de la valeur de couple de référence, et pour laquelle le taux de variation est le plus proche du taux de variation de la valeur de couple de référence.

5. Le testeur de couple (302) selon l'une quelconque des revendications1à 4, dans lequel le circuit de traitement (208) est configuré pour amener le testeur de couple (302) à se connecter en outre aux multiples clés dynamométriques électroniques qui se trouvent à portée radio du testeur de couple, et à établir ainsi des liaisons radio par lesquelles les multiples valeurs de couple sont reçues sans fil par communication radio ;
éventuellement, les liaisons radio comprenant une ou plusieurs des technologies suivantes : Wi-Fi, Bluetooth, Bluetooth Low Energy, Zigbee ou des liaisons à modulation par déplacement de fréquence (FSK) ; et/ou
éventuellement, dans lequel le circuit de traitement (208) est configuré pour amener le testeur de couple (302) à déconnecter en outre la clé dynamométrique électronique (100) du testeur de couple (302) une fois la vérification de la clé dynamométrique électronique (100) effectuée.

6. Le testeur de couple (302) selon la revendication 1, dans lequel le testeur de couple (302) est configuré pour vérifier plusieurs clés dynamométriques électroniques (500), et dans lequel le circuit de traitement (208) du testeur de couple (302) est configuré pour amener le testeur de couple (302) à au moins :
connecter le testeur de couple (302) aux multiples clés dynamométriques électroniques se trouvant à portée radio du testeur de couple, et établir ainsi des liaisons radio entre le testeur de couple (302) et les multiples clés dynamométriques électroniques (502) ;
vérifier une clé dynamométrique électronique (100) parmi les multiples clés dynamométriques électroniques, y compris le testeur de couple (302) (504), en la faisant :
déterminer la valeur de couple de référence au niveau du testeur de couple, à partir du couple appliqué par la clé dynamométrique électronique (100) au testeur de couple (302) avec lequel la clé dynamométrique électronique (100) est en prise (506) ;
recevoir les multiples valeurs de couple au niveau du testeur de couple (302) simultanément à la valeur de couple de référence déterminée au niveau du testeur de couple, en e ant les multiples valeurs de couple reçues des multiples clés dynamométriques électroniques, sans fil par communication radio via les liaisons radio (508) ;
identifier l'une des multiples valeurs de couple comme étant la valeur de couple provenant de la clé dynamométrique électronique (100), sur la base de la valeur de couple de référence et des multiples valeurs de couple (510) ;
effectuer la vérification de la clé dynamométrique électronique (100) sur la base de la valeur de couple de référence et de la valeur de couple ainsi identifiée (512) ; et
fournir l'indication du résultat de la vérification de la clé dynamométrique électronique (100) (514) ;
déconnecter la clé dynamométrique électronique (100) du testeur de couple (302) une fois la vérification de la clé dynamométrique électronique (100) effectuée (516) ; et
répéter les opérations de vérification et de déconnexion pour les autres clés dynamométriques électroniques parmi les multiples clés connectées au testeur de couple (302) une fois que la clé dynamométrique électronique (100) a été déconnectée (516).

7. Le testeur de couple (302) selon la revendication 6, dans lequel les liaisons radio comprennent une ou plusieurs des liaisons suivantes : Wi-Fi, Bluetooth, Bluetooth Low Energy, Zigbee ou modulation par déplacement de fréquence (FSK).

8. Le testeur de couple (302) selon la revendication 6 ou 7 de la demande (302), dans lequel l'une des multiples valeurs de couple est identifiée comme étant celle qui se situe dans une plage de valeurs seuil par rapport à la valeur de couple de référence, ou celle qui est la plus proche de la valeur de couple de référence.

9. Le testeur de couple (302) selon l'une quelconque des revendications 6 à 8, dans lequel l'une des multiples valeurs de couple est identifiée comme étant celle pour laquelle un taux de variation se situe dans une plage de seuil par rapport au taux de variation de la valeur de couple de référence, ou celle pour laquelle le taux de variation est le plus proche du taux de variation de la valeur de couple de référence.

10. Le testeur de couple (302) selon l'une quelconque des revendications 6 à 9, dans lequel l'une des multiples valeurs de couple est identifiée comme étant celle qui se situe à l'intérieur d'une valeur seuil par rapport à la valeur de couple de référence, et pour laquelle un taux de variation se situe à l'intérieur d'un taux seuil par rapport au taux de variation de la valeur de couple de référence ; et/ou
dans lequel l'une des multiples valeurs de couple est identifiée comme étant celle la plus proche de la valeur de couple de référence, et pour laquelle le taux de variation est le plus proche du taux de variation de la valeur de couple de référence.

11. Procédé de vérification d'une clé dynamométrique électronique (100), le procédé comprenant :
la détermination d'une valeur de couple de référence au niveau d'un testeur de couple (302), à partir d'un couple appliqué par une clé dynamométrique électronique (100) au testeur de couple (302) avec lequel la clé dynamométrique électronique (100) est en prise (402) ;
la réception, au niveau du testeur de couple (302), de plusieurs valeurs de couple simultanément à la valeur de couple de référence déterminée au niveau du testeur de couple, lesdites plusieurs valeurs de couple étant reçues de plusieurs clés dynamométriques électroniques, y compris la clé dynamométrique électronique (100) engagée avec le testeur de couple (302) (404) ;
identifier l'une des multiples valeurs de couple comme étant une valeur de couple provenant de la clé dynamométrique électronique (100), sur la base de la valeur de couple de référence et des multiples valeurs de couple (406) ;
effectuer une vérification de la clé dynamométrique électronique (100) sur la base de la valeur de couple de référence et de la valeur de couple ainsi identifiée (408) ; et
fournir une indication relative à la vérification de la clé dynamométrique électronique (100) (410).

12. Procédé selon la revendication 11, dans lequel ladite valeur de couple parmi les multiples valeurs de couple est identifiée comme étant celle qui se situe dans une plage de seuil par rapport à la valeur de couple de référence, ou celle qui est la plus proche de la valeur de couple de référence.

13. Procédé selon la revendication 11 ou 12, dans lequel l'une des multiples valeurs de couple est identifiée comme étant celle pour laquelle un taux de variation se situe dans une plage de seuil par rapport au taux de variation de la valeur de couple de référence, ou celle pour laquelle le taux de variation est le plus proche du taux de variation de la valeur de couple de référence.

14. Procédé selon l'une quelconque des revendications 11 à 13, dans lequel l'une des multiples valeurs de couple est identifiée comme étant celle qui se situe à l'intérieur d'une valeur seuil par rapport à la valeur de couple de référence, et pour laquelle un taux de variation se situe à l'intérieur d'un taux seuil par rapport au taux de variation de la valeur de couple de référence ; et/ou
dans lequel l'une des multiples valeurs de couple est identifiée comme étant celle la plus proche de la valeur de couple de référence, et pour laquelle le taux de variation est le plus proche du taux de variation de la valeur de couple de référence.

15. Procédé selon l'une quelconque des revendications 11 à 14, dans lequel le procédé comprend en outre la connexion du testeur de couple (302) aux multiples clés dynamométriques électroniques qui se trouvent à portée radio du testeur de couple, et l'établissement ainsi de liaisons radio par lesquelles les multiples valeurs de couple sont reçues sans fil par communication radio ;
éventuellement, le procédé comprenant en outre la déconnexion de la clé dynamométrique électronique (100) du testeur de couple (302) une fois la vérification de la clé dynamométrique électronique (100) effectuée.
